# EUROPEAN PATENT SPECIFICATION

(11) **EP 3 222 504 B1**
(45) Date of publication and mention of the grant of the patent: **08.07.2020**
(21) Application number: 17162747.4
(22) Date of filing: 24.03.2017
(51) Int. Cl.: B62J 11/00, B62J 27/00, B62J 6/20, F16B 2/10, F16B 9/02, B62K 25/08

(54) **ATTACHMENT PART FIXING STRUCTURE FOR VEHICLE**
BEFESTIGUNGSTEILFIXIERUNGSSTRUKTUR FÜR EIN FAHRZEUG
STRUCTURE DE FIXATION DE PARTIE D'ATTACHE POUR VÉHICULE

(30) Priority: 25.03.2016 JP 2016061208
(43) Date of publication of application: 27.09.2017
(73) Proprietor: Honda Motor Co., Ltd., Minato-ku Tokyo 107-8556 (JP)
(72) Inventor: Yamaguchi, Takashi, Saitama 351-0193 (JP); Atsuchi, Michio, Saitama 351-0193 (JP); Nakagawa, Hideaki, Saitama 351-0193 (JP)
(74) Representative: Beder, Jens

(56) References cited:
- DE-U1- 8 903 210
- DE-U1- 20 219 756
- FR-A- 549 176
- GB-A- 244 679

## Description

### BACKGROUND OF THE INVENTION

### Field of the Invention:

The present invention relates to an attachment part fixing structure for a vehicle for positioning and fixing a vehicle attachment part to a side wall of a columnar member of the vehicle.

### Description of the Related Art:

In so-called saddle type vehicles such as motorcycles and bicycles, a reflecting plate referred to as a reflector may be provided in order to improve the ability of others to observe the vehicle during the nighttime or the like. More specifically, by other people visually confirming the presence of reflected light from the reflector, it is possible to recognize the existence of the vehicle at the position of reflection.

Such a reflector, for example, is fixed in position on a front fork or the like through a stay. As a stay of this type, the stay disclosed in Japanese Laid-Open Utility Model Publication No. 04-001088 is known. Such a stay includes a bracket in which an insertion hole is formed through which a columnar handle stem is inserted, and two flange members that protrude from the bracket and face toward one another mutually. The stay is attached to the handle stem by tightening the flange members by bolts. Further, DE 89 03 210 U1 discloses an attachment part fixing structure according to the preamble of claim 1.

In addition, on a back surface of the reflector, a protrusion is provided which is biased towards one peripheral edge portion. A penetrating hole is formed in the protrusion, and a bolt is passed through the penetrating hole. More specifically, the bolt performs a function of tightening the flange members of the stay, together with retaining the reflector on the stay.

### SUMMARY OF THE INVENTION

With the fixing structure disclosed in Japanese Laid-Open Utility Model Publication No. 04-001088, it may be assumed that if an external force were to act with respect to the reflector along a direction of rotation of the bolt, the bolt would become loosened, thereby allowing the reflector to rotate about the bolt. In other words, there is a concern that the reflector could be placed in a positionally shifted state.

A principal object of the present invention is to provide an attachment part fixing structure for a vehicle in which positional shifting of an attachment part such as a reflector or the like can be avoided.

According to an embodiment of the present invention defined in claim 1, an attachment part fixing structure for a vehicle is provided, which enables a vehicle attachment part to be positioned and fixed to a side wall of a columnar member of a vehicle, comprising a stay including an annular member in which an insertion hole is formed and through which the columnar member is inserted, fastened portions that project outwardly of the side wall from the annular member and which face toward each other, and a back surface support member joined to the fastened portions and which supports a back surface of the vehicle attachment part, and a tightening member configured to tighten and fasten the fastened portions to thereby attach the stay to the columnar member, wherein the stay further includes a displacement regulating member configured to restrict displacement of the vehicle attachment part.

The term "columnar" as used in the present invention includes the meanings of both a solid columnar member and a hollow columnar member. Stated otherwise, even a tubular member may be included within the meaning of the term "columnar".

In the foregoing manner, the location where the vehicle attachment part is retained is disposed separately from the fastened portions that are tightened and fastened to the columnar member. In addition, the displacement regulating member is further provided on the stay. Therefore, without an increase in the number of component parts, it is possible to avoid displacement of the vehicle attachment part. More specifically, the occurrence of positional shifting of the vehicle attachment part can be avoided.

The vehicle attachment part further includes on the back surface thereof a columnar projection that projects toward the back surface support member, and the fastened portions preferably grip the columnar projection therebetween.

In accordance with this feature, it is difficult for the vehicle attachment part to become detached or separate away from the stay, and it is more unlikely for positional shifting thereof to occur. This is because, when the fastened portions are tightened and fastened by the tightening member, the columnar projection is gripped as a result of being pressed by the fastened portions.

In the case that the columnar projection and the stay are made from materials that differ in rigidity, an engagement member preferably is provided on one from among the columnar projection and the stay that has a higher rigidity than the other.

In this case, when the fastened portions are tightened and fastened by the tightening member, the engagement member, which is provided on the member with higher rigidity, presses the other member with lower rigidity. As a result, deformation corresponding to the shape of the engagement member takes place on the member with lower rigidity. More specifically, enmeshment occurs due to the engagement member biting into the member with lower rigidity. Consequently, it is possible to more effectively prevent the vehicle attachment part from becoming detached from the stay. In other words, the retaining force applied with respect to the vehicle attachment part is increased.

As a preferred example of the displacement regulating member, the displacement regulating member may be constituted by claw members configured to grip at least portions of a peripheral edge part of the vehicle attachment part. The claw members preferably are provided at positions where they are capable of coming in proximity to each other accompanying tightening of the fastened portions.

For example, when a vehicle attachment part undergoes rotation, it interferes with the claw members. Therefore, rotation, i.e., the occurrence of positional shifting, of the vehicle attachment part is prevented.

The fastened portions may function simultaneously as the displacement regulating member.

For example, the columnar projection may be provided in the form of a polygonal shaped body, whereas insertion grooves having a shape corresponding to the columnar projection may be formed in the fastened portions. In this case, the apexes of the columnar projection interfere with the apexes of the insertion grooves. Due to this feature as well, rotation (the occurrence of positional shifting) of the vehicle attachment part is prevented.

In the above configurations, a protrusion preferably is provided on the side wall of the columnar member, and a recess into which the protrusion enters preferably is formed on the annular member. More specifically, the protrusion engages with the recess.

Due to such engagement between the protrusion and the recess, it is difficult for the stay to rotate, become raised or lowered, even if an external force acts in a direction to rotate the stay, or if an external force acts in a direction that urges the stay to ascend or descend along the columnar member. Stated otherwise, it is unlikely for the stay to undergo displacement. Accordingly, the occurrence of positional shifting of the vehicle attachment part can more reliably be avoided.

Further, as a preferred example of the vehicle attachment part, the vehicle attachment part may be a reflector that reflects light.

In this case, another person can easily confirm visually the reflected light from the reflector. In the forgoing manner, the occurrence of positional shifting of the reflector can be avoided. Accordingly, it is easy for the other person to recognize the presence of the vehicle.

According to the present invention defined in claim 1, the location where the vehicle attachment part is retained is disposed separately from the fastened portions that are tightened and fastened to the columnar member, and together therewith, the displacement regulating member is further provided on the stay. Therefore, without an increase in the number of component parts, it is possible to avoid displacement of the vehicle attachment part, or stated otherwise, the occurrence of positional shifting thereof can be avoided.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is an outline side view of a motorcycle to which an attachment part fixing structure for a vehicle according to an embodiment of the present invention is applied;
FIG. 2 is an enlarged rear view of a principal part of a left front fork shown in FIG. 1;
FIG. 3 is an outline overall perspective view of a stay, which constitutes part of the attachment part fixing structure for a vehicle;
FIG. 4 is an enlarged rear view of principal parts when the stay is attached to the left front fork;
FIG. 5 is a vertical cross-sectional view of principal parts when the stay is attached to the left front fork;
FIG. 6 is a rear side perspective view of a reflector which is an attachment part for the vehicle;
FIG. 7 is an outline perspective view of principal parts when the stay and the reflector are attached to the left front fork; and
FIG. 8 is a rear perspective view of a reflector that constitutes part of an attachment part fixing structure for a vehicle according to another embodiment.

### DESCRIPTION OF THE PREFERRED EMBODIMENTS

Preferred embodiments in relation to an attachment part fixing structure for a vehicle according to the present invention will be presented and described in detail below with reference to the accompanying drawings. In the present embodiment, the vehicle is exemplified by a scooter type motorcycle. Further, front and rear, up and down, and left and right directions are referred to based on the perspective of a rider who is seated on the motorcycle.

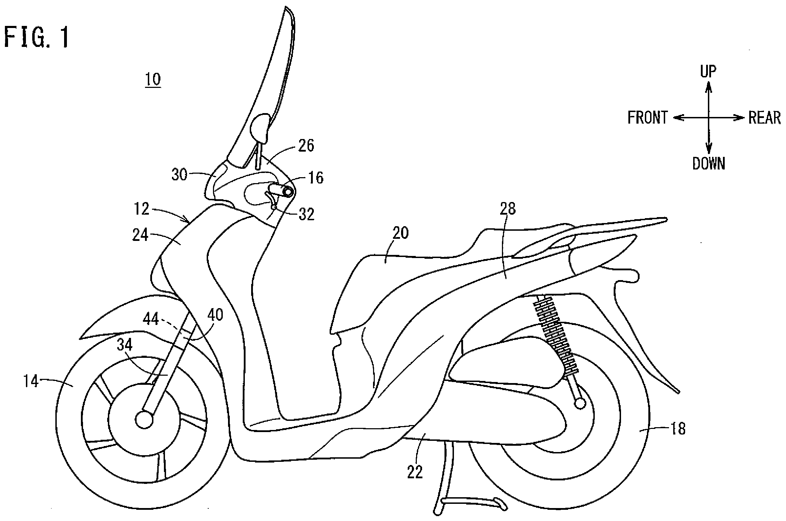

FIG. 1 is an outline side view of a motorcycle 10 to which an attachment part fixing structure for a vehicle according to an embodiment of the present invention is applied. Initially, an outline description concerning the motorcycle 10 will be presented.

The motorcycle 10 is equipped with a vehicle body cover 12 that covers a vehicle body frame, a front wheel 14 that serves as a steered wheel, a handle 16 for steering the front wheel 14, a rear wheel 18 which is a driven wheel, a seat 20 on which a rider sits, and a swing unit 22.

The vehicle body cover 12 includes a front cover 24 that covers a front portion of the vehicle body frame, a head cover 26 positioned above the front cover 24, and a rear cover 28 that covers a rear portion of the vehicle body frame. A head lamp 30 which irradiates light toward the front of the vehicle, a left brake lever 32, and a non-illustrated right brake lever are provided on the head cover 26.

The front wheel 14 is connected to the handle 16 via a left front fork 34 and a non-illustrated right front fork. Consequently, when the driver steers the handle 16 to the left or right with respect to a direction of travel, the front wheel 14 is inclined in a leftward or rightward direction. As a result, the travel direction of the motorcycle 10 is changed.

In this instance, a reflector (reflecting plate) 40 as a vehicle attachment part is positioned and fixed to the left front fork 34. Next, a structure by which the reflector 40 is positioned and fixed to the left front fork 34, that is, the attachment part fixing structure according to the present embodiment, will be described.

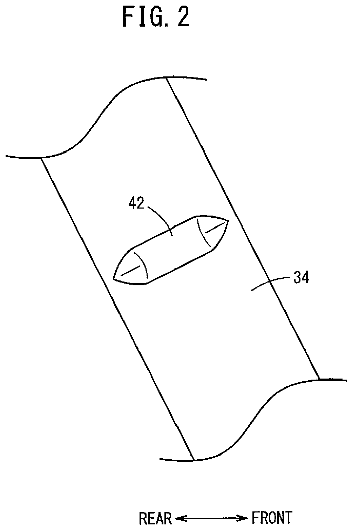

The left front fork 34 is a hollow columnar member having an annular shape with a substantially perfect circular cross section in a direction orthogonal to the longitudinal direction thereof. More specifically, the direction orthogonal to the longitudinal direction is a diametrical direction. Further, as shown in FIG. 2, on a back surface that faces toward a side wall of the right front fork, a protrusion 42 is provided, which protrudes outwardly in the diametrical direction and extends in the circumferential direction of the side wall.

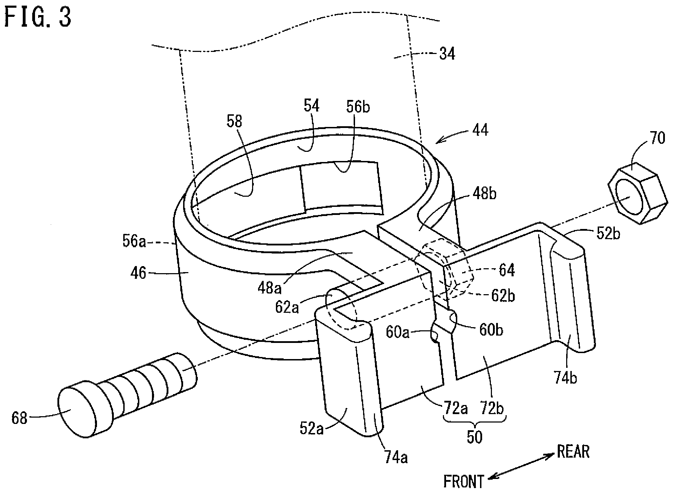

The stay 44 shown in FIG. 3 is attached to the left front fork 34. As will be discussed later, the reflector 40 is positioned on and fixed to the left front fork 34 through the stay 44.

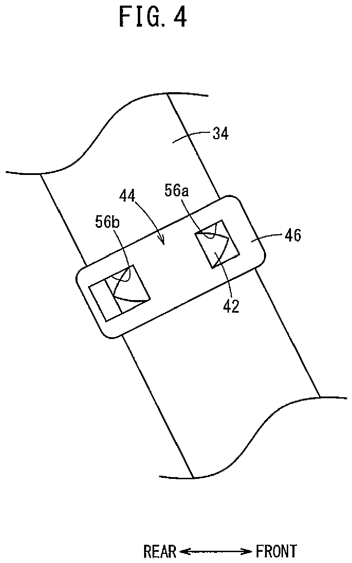

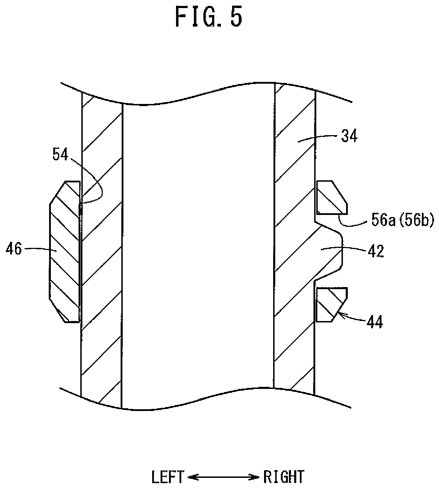

The stay 44 includes an annular member 46, fastened portions 48a, 48b, a back surface support member 50, and claw members 52a, 52b that serve as displacement regulating members. Among these elements, the annular member 46 is a substantially circular ring-shaped member having an insertion hole 54 formed inside. Further, two window parts 56a, 56b, which penetrate along a thickness direction, are formed in the annular member 46. On an inner wall side of the annular member 46, a recess 58 is formed between both of the window parts 56a, 56b. Consequently, the wall thickness at the site where the recess 58 is formed is smaller than at other locations. As shown in FIGS. 4 and 5, when the stay 44 is attached to the left front fork 34, the protrusion 42 enters into the recess 58.

A portion of the annular member 46 is slightly cut out (see FIG. 3) to thereby form a notch, and from such a cut out location, the fastened portions 48a, 48b protrude outwardly in a diametrical direction of the left front fork 34. The fastened portions 48a, 48b face toward each other, and in an unfastened state, a slight distance exists mutually therebetween. In the facing surfaces of the fastened portions 48a, 48b, insertion grooves 60a, 60b are formed, which are semicircular in cross section.

Through holes 62a, 62b are formed respectively in the fastened portions 48a, 48b. In the vicinity of the opening of the through hole 62b of the fastened portion 48b, a hexagonal hole 64, which is hexagonal in cross section and is wider than the through hole 62b, communicates with the opening. Therefore, a step is formed at the boundary between the through hole 62b and the hexagonal hole 64. A bolt 68 (fastening member) is passed through the through holes 62a, 62b, and the hexagonal nut 70 (fastening member) is screw-engaged with the bolt 68. Accompanying such screw-engagement, the fastened portions 48a, 48b are tightened and brought mutually into proximity with each other. The hexagonal nut 70 enters into the hexagonal hole 64 and is seated on the step.

A wide back surface support member 50 is joined to the fastened portions 48a, 48b. More specifically, the back surface support member 50 includes a front side wall portion 72a that extends toward the front side of the vehicle from the fastened portion 48a, and a rear side wall portion 72b that extends toward the rear side of the vehicle from the fastened portion 48b. Since the fastened portions 48a, 48b are separated, a clearance is formed between the front side wall portion 72a and the rear side wall portion 72b. The insertion grooves 60a, 60b open at the clearance.

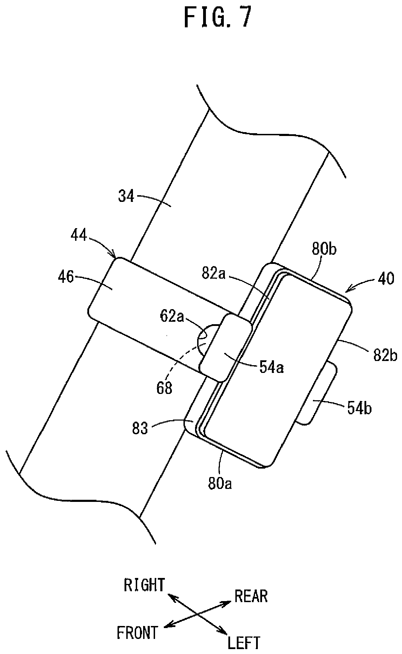

From rear end portions of the back surface support member 50, the claw members 52a, 52b project out respectively by being bent in a substantially perpendicular direction in a leftward outside direction of the vehicle body. The claw members 52a, 52b are constituted by folded back portions 74a, 74b, in which distal end portions that are farthest from the back surface support member 50 are folded back. The reflector 40 is interposed in a vertically elongate manner (at an upright posture) between the back surface support member 50 and the folded back portions 74a, 74b (see FIG. 7). More specifically, the folded back portions 74a, 74b abut against the front surface of the reflector 40. Owing thereto, displacement of the reflector 40 in the vehicle transverse direction is suppressed. In this manner, the folded back portions 74a, 74b serve as displacement regulating members that restrict displacement of the reflector 40 in the vehicle transverse direction.

The stay 44 which is constructed in the foregoing manner is preferably made from a resin. In this case, the stay 44 exhibits a large elasticity.

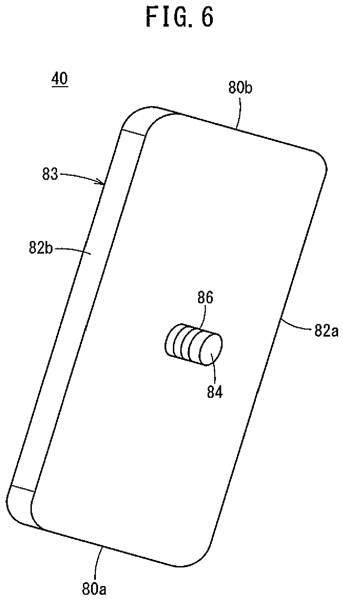

The reflector 40 in this case, as shown in FIG. 6, is of a rectangular shape having two short sides 80a, 80b and two long sides 82a, 82b. The reflector 40 is constituted by a non-illustrated plate shaped bracket and a main body 83. The non-illustrated plate shaped bracket is made of a resin reflective material and metal (for example, stainless steel) and is embedded in the main body 83 which is formed by insert molding. A columnar projection 84 is disposed on the plate shaped bracket, and the columnar projection 84 projects out on the back surface of the main body 83. A male screw 86 (engagement member) is engraved on a side wall of the columnar projection 84. Since the columnar projection 84 is made from metal, the rigidity of the male screw 86 is greater than that of the stay 44.

The attachment part fixing structure for a vehicle according to the present embodiment is constituted in the following manner by the stay 44 and the reflector 40.

In a so-called preliminary state, the left front fork 34 is inserted beforehand through the insertion hole 54 of the stay 44. The left front fork 34 in this state is mounted on the motorcycle 10. Alternatively, the left front fork 34 may be inserted therein in a so-called retrofitted manner. In this case, for example, the claw members 52a, 52b are grasped and pulled apart so that the fastened portions 48a, 48b are further separated from each other. Since the stay 44 possesses sufficient elasticity as described above, the fastened portions 48a and 48b can be opened without breaking. More specifically, since the clearance formed between the fastened portions 48a, 48b is enlarged, the left front fork 34 can easily be made to pass therethrough to the insertion hole 54.

In either of such cases, the protrusion 42 which is formed on the side wall of the left front fork 34 enters into the recess 58 formed on the back of the annular member 46 of the stay 44, and both members become engaged with each other. End portions in the circumferential direction of the protrusion 42 engage with end portions in the circumferential direction of the window parts 56a, 56b that are formed in the stay 44. As a result, the condition shown in FIGS. 4 and 5 is brought about.

Furthermore, the columnar projection 84 (male screw 86) of the reflector 40 is inserted into the insertion grooves 60a, 60b from the opening formed on the back surface support member 50. Thereafter, if the fastened portions 48a, 48b are released from the pulling force applied thereto, the fastened portions 48a, 48b are restored to their original positions by the elasticity thereof and come into proximity with each other. The back surface of the reflector 40 is placed in abutment against the back surface support member 50 (the front side wall portion 72a and the rear side wall portion 72b). In addition, together with the long sides 82a, 82b being positioned between the back surface support member 50 and the folded back portions 74a, 74b, the inner surfaces of the folded back portions 74a, 74b are placed in abutment against the front surface of the reflector 40.

Next, the bolt 68 is inserted into the through hole 62a of the fastened portion 48a. A shank portion of the bolt 68 projects out from the through hole 62b of the fastened portion 48b. The hexagonal nut 70 is screw-engaged with the projecting shank portion. Accompanying advancement of such screw-engagement, the fastened portions 48a, 48b are tightened and brought further into proximity with each other. More specifically, the fastening direction is in the longitudinal direction of the vehicle. Due to such fastening, the inner wall of the annular member 46 presses against the side wall of the left front fork 34.

The hexagonal nut 70 is seated on the step that forms the bottom surface of the hexagonal hole 64. Because the dimensions of the hexagonal hole 64 correspond with the dimensions of the hexagonal nut 70, rotation of the hexagonal nut 70 in the hexagonal hole 64 is prevented. This is because the apexes of the hexagonal nut 70 and the hexagonal hole 64 interfere with each other to prevent the hexagonal nut 70 from rotating. Stated otherwise, rotation of the hexagonal nut 70 is stopped. Therefore, it is unlikely that the hexagonal nut 70 will become loosened.

This feature, coupled with the fact that the protrusion 42 provided on the left front fork 34 enters into the recess 58 on the inner wall of the annular member 46 and engages with the recess 58, enables the stay 44 to be firmly positioned and fixed to the left front fork 34.

More specifically, even if the hexagonal nut 70 becomes loosened and the pressing force of the annular member 46 against the side wall of the left front fork 34 is reduced, when an external force that acts in the direction to rotate the stay 44 is applied, the protrusion 42 formed on the left front fork 34 remains engaged with and latched by the end portions in the circumferential direction of the window parts 56a, 56b. As a result, rotation of the stay 44 beyond its set position is prevented. Furthermore, since the protrusion 42 enters into the recess 58 formed on the inner wall of the annular member 46, even if an external force acts in a direction to urge the stay 44 to ascend or descend along the left front fork 34, it is unlikely that the protrusion 42 will be able to overcome and move beyond the recess 58 or the window parts 56a, 56b. Consequently, raising or lowering of the stay 44 along the left front fork 34 is also prevented.

In this instance, accompanying the aforementioned tightening, the columnar projection 84 of the reflector 40 is gripped firmly between each of the fastened portions 48a, 48b. The rigidity of the columnar projection 84, which is made from metal, is greater than the rigidity of the stay 44, which is made from resin. Therefore, the wall surfaces of the insertion grooves 60a, 60b formed in the fastened portions 48a, 48b that constitute the stay 44 are deformed in shape in correspondence with the shape of the male screw 86. As a result, the male screw 86 becomes enmeshed with the wall surfaces of the insertion grooves 60a, 60b. More specifically, the male screw 86 enmeshes with the fastened portions 48a, 48b in a state of being gripped between the fastened portions 48a, 48b. Therefore, it is unlikely that the reflector 40 will become detached from the stay 44.

In addition, because the claw members 52a, 52b approach one another accompanying tightening, as shown in FIG. 7, the long sides 82a, 82b of the reflector 40 are gripped firmly between the claw members 52a, 52b. Even at times that the reflector 40 attempts to rotate about the male screw 86, the long sides 82a, 82b interfere with the claw members 52a, 52b to prevent such rotation. As a result, rotation of the reflector 40 is prevented. More specifically, the reflector 40 is stopped from rotating by the claw members 52a, 52b, and displacement of the reflector 40 in a direction of rotation thereof is restricted.

Further, since the folded back portions 74a and 74b abut against the front surface of the reflector 40, the reflector 40 is blocked. Therefore, displacement of the columnar projection 84 of the reflector 40 outwardly in the vehicle transverse direction (left/right direction) from the insertion grooves 60a, 60b can be suppressed.

In this manner, according to the present embodiment, it is unlikely for positional shifting of the stay 44 itself to occur. In addition, by providing on the stay 44 a location where the reflector 40 is held, and further providing the claw members 52a, 52b that function as a displacement regulating member, it is possible to prevent the occurrence of positional shifting of the reflector 40. Consequently, other people can visually confirm the reflected light from the reflector 40, whereby it is easy to recognize the existence of the vehicle.

In addition, the male screw 86 of the columnar projection 84 of the reflector 40 becomes enmeshed with the wall surfaces of the insertion grooves 60a, 60b of the fastened portions 48a, 48b, together with the folded back portions 74a, 74b of the stay 44 abutting against the front surface of the reflector 40. In accordance with the above feature, it is unlikely that the reflector 40 will become detached or drop off from the stay 44.

Ultimately, by adopting the above-described configuration, without an increase in the number of component parts, positional shifting of the stay 44 and the reflector 40 can be prevented, and it is possible to avoid falling off of the reflector 40 from the stay 44.

The present invention is not limited in particular to the above-described embodiment, and various modifications can be adopted therein without departing from the scope of claim 1.

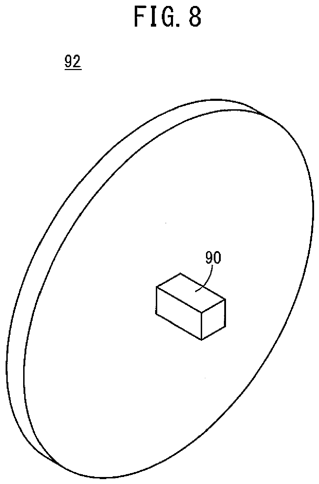

For example, as shown in FIG. 8, a columnar projection 90 having a polygonal shape (a square columnar shape in FIG. 8) may be provided. In this case, the shapes of the insertion grooves 60a, 60b formed in the fastened portions 48a, 48b are made to correspond with the shape of the columnar projection 90.

In such a condition, the apexes of the columnar projection 90 coincide with the apexes of the insertion grooves 60a, 60b. Consequently, rotation of the columnar projection 90 is prevented. As a result, rotation of the reflector 40 is stopped, and ultimately, positional shifting thereof is prevented. More specifically, in this state, the fastened portions 48a, 48b function simultaneously as a displacement regulating member. Accordingly, there is no particular need to provide the claw members 52a, 52b on the stay 44.

Such a configuration is particularly effective when positioning and fixing a reflector 92 having a substantially circular shape when viewed in plan.

Further, in the above embodiment, although an exemplary case has been presented in which the reflectors 40, 92 are retained by the stay 44, it goes without saying that the parts to be held may be parts other than the reflectors 40, 92.

Further, the vehicle may be a bicycle, a three wheeled vehicle, or the like, and the object to which the stay 44 is attached is not limited to a left front fork 34, but may be any type of columnar member.

## Claims

1. An attachment part fixing structure for a vehicle configured to position and fix a vehicle attachment part (40) to a side wall of a columnar member (34) of a vehicle (10), comprising:
a stay (44) made up from a single piece integrally including:
- an annular member (46) in which an insertion hole (54) is formed and through which the columnar member (34) is inserted,
- fastened portions (48a, 48b) that project outwardly of the side wall from the annular member (46) and face toward each other, and
- a back surface support member (50) that is joined to the fastened portions (48a, 48b) and supports a back surface of the vehicle attachment part (40); and
a tightening member (68, 70) configured to tighten and fasten the fastened portions (48a, 48b) to thereby attach the stay (44) to the columnar member (34);
wherein the stay (44) further includes a displacement regulating member (52a, 52b, 74a, 74b) configured to restrict displacement of the vehicle attachment part (40); **characterized in that** the vehicle attachment part (40) includes on the back surface thereof a columnar projection (84) that projects toward the back surface support member (50), and the fastened portions (48a, 48b) grip the columnar projection (84) therebetween.

2. The fixing structure according to claim 1, wherein the columnar projection (84) and the stay (44) are made from materials that differ in rigidity, and an engagement member (86) is provided on one from among the columnar projection (84) and the stay (44) that has a higher rigidity than the other.

3. The fixing structure according to any one of claims 1 to 2, wherein the displacement regulating member (52a, 52b, 74a, 74b) is made up from claw members (52a, 52b) configured to grip at least portions of a peripheral edge part of the vehicle attachment part (40).

4. The fixing structure according to any one of claims 1 to 2, wherein the fastened portions (48a, 48b) function simultaneously as the displacement regulating member.

5. The fixing structure according to any one of claims 1 to 4, wherein a protrusion (42) is provided on the side wall of the columnar member (34), and a recess (58) into which the protrusion (42) enters is formed on the annular member (46).

6. The fixing structure according to any one of claims 1 to 5, wherein the vehicle attachment part (40) is a reflector (40) configured to reflect light.

## Patentansprüche

1. Anbauteil-Befestigungskonstruktion für ein Fahrzeug, die zum Positionieren und Befestigen eines Fahrzeuganbauteils (40) an einer Seitenwand eines säulenförmigen Elements (34) eines Fahrzeugs (10) konfiguriert ist, umfassend:
eine Strebe (44), die aus einem einzigen Stück besteht, das ein Ganzes umfasst:
- ein ringförmiges Element (46), in dem ein Einführungsloch (54) ausgebildet ist und durch das das säulenförmige Element (34) eingeführt wird,
- befestigte Abschnitte (48a, 48b), die von dem ringförmigen Element (46) aus der Seitenwand nach außen vorstehen und einander zugewandt sind, und
- ein Rückflächenstützelement (50), das mit den befestigten Abschnitten (48a, 48b) verbunden ist und eine Rückfläche des Fahrzeuganbauteils (40) stützt; und
ein Festziehelement (68, 70), das zum Festziehen und Befestigen der befestigten Abschnitte (48a, 48b) konfiguriert ist, um dadurch den Steg (44) an dem säulenförmigen Element (34) zu befestigen;
wobei die Strebe (44) ferner ein Verschiebungsregulierungselement (52a, 52b, 74a, 74b) aufweist, das so konfiguriert ist, dass es die Verschiebung des Fahrzeugbefestigungsteils (40) einschränkt;
**dadurch gekennzeichnet, dass** das Fahrzeuganbauteil (40) auf seiner Rückseite einen säulenförmigen Vorsprung (84) aufweist, der in Richtung auf das Rückflächenstützelement (50) vorsteht, und die befestigten Abschnitte (48a, 48b) den säulenförmigen Vorsprung (84) dazwischen greifen.

2. Befestigungskonstruktion nach Anspruch 1, wobei der säulenförmige Vorsprung (84) und die Strebe (44) aus Materialien hergestellt sind, die sich in der Steifigkeit unterscheiden, und ein Eingriffselement (86) an einem von dem säulenförmigen Vorsprung (84) und der Strebe (44) vorgesehen ist, das eine höhere Steifigkeit als das andere aufweist.

3. Befestigungskonstruktion nach einem der Ansprüche 1 bis 2, wobei das Verschiebungsregulierungselement (52a, 52b, 74a, 74b) aus Klauenelementen (52a, 52b) besteht, die so konfiguriert sind, dass sie zumindest Abschnitte eines Umfangsrandteils des Fahrzeuganbauteils (40) greifen.

4. Befestigungskonstruktion nach einem der Ansprüche 1 bis 2, wobei die befestigten Teile (48a, 48b) gleichzeitig als das die Verschiebung regulierende Element fungieren.

5. Befestigungskonstruktion nach einem der Ansprüche 1 bis 4, wobei ein Vorsprung (42) an der Seitenwand des säulenförmigen Elements (34) vorgesehen ist und eine Aussparung (58), in die der Vorsprung (42) eintritt, an dem ringförmigen Element (46) ausgebildet ist.

6. Befestigungskonstruktion nach einem der Ansprüche 1 bis 5, wobei das Fahrzeuganbauteil (40) ein Reflektor (40) ist, der so konfiguriert ist, dass es Licht reflektiert.

## Revendications

1. Structure de fixation de partie d'attache pour un véhicule configurée pour positionner et fixer une partie d'attache de véhicule (40) sur une paroi latérale d'un organe en colonne (34) d'un véhicule (10), comprenant :
un renfort (44) constitué d'une seule pièce incluant de manière intégrée :
- un organe annulaire (46) dans lequel un trou d'insertion (54) est formé et à travers lequel l'organe en colonne (34) est inséré,
- des sections arrimées (48a, 48b) qui font saillie vers l'extérieur de la paroi latérale à partir de l'organe annulaire (46) et se font face l'une en direction de l'autre, et
un organe de support de surface arrière (50) qui est joint aux sections arrimées (48a, 48b) et porte une surface arrière de la partie d'attache de véhicule (40) ; et
un organe de serrage (68, 70) configuré pour serrer et arrimer les sections arrimées (48a, 48b) pour ainsi attacher le renfort (44) sur l'organe en colonne (34) ;
dans lequel le renfort (44) inclut en outre un organe de régulation de déplacement (52a, 52b, 74a, 74b) configuré pour limiter le déplacement de la partie d'attache de véhicule (40) ;
**caractérisé en ce que** la partie d'attache de véhicule (40) inclut sur la surface arrière de celle-ci une saillie en colonne (84) qui fait saillie en direction de l'organe de support de surface arrière (50), et les parties arrimées (48a, 48b) saisissent la saillie en colonne (84) entre elles.

2. Structure de fixation selon la revendication 1, dans laquelle la saillie en colonne (84) et le renfort (44) sont constitués de matériaux qui diffèrent en rigidité, et un organe de mise en prise (86) est fourni sur celui ou celle parmi la saillie en colonne (84) et le renfort (44) qui possède une rigidité supérieure à l'autre.

3. Structure de fixation selon l'une quelconque des revendications 1 à 2, dans laquelle l'organe de régulation de déplacement (52a, 52b, 74a, 74b) est réalisé à partir d'organes à griffes (52a, 52b) configurés pour saisir au moins des sections d'une partie de bord périphérique de la partie d'attache de véhicule (40) .

4. Structure de fixation selon l'une quelconque des revendications 1 à 2, dans laquelle les sections arrimées (48a, 48b) fonctionnent simultanément comme organe de régulation de déplacement.

5. Structure de fixation selon l'une quelconque des revendications 1 à 4, dans laquelle une saillie (42) est fournie sur la paroi latérale de l'organe en colonne (34), et un évidement (58) dans lequel la saillie (42) pénètre est formé sur l'organe annulaire (46).

6. Structure de fixation selon l'une quelconque des revendications 1 à 5, dans laquelle la partie d'attache de véhicule (40) est un réflecteur (40) configuré pour réfléchir la lumière.
